# EUROPEAN PATENT SPECIFICATION

(11) **EP 4 010 501 B1**
(45) Date of publication and mention of the grant of the patent: **07.06.2023**
(21) Application number: 20742298.1
(22) Date of filing: 23.07.2020
(51) Int. Cl.: C21B 5/00, F27D 3/00, F27B 1/20, F27D 3/10, F27D 19/00

(54) **SEAL VALVE FOR A PCI SYSTEM OF A BLAST FURNACE**
DICHTUNGSVENTIL FÜR EIN PCI-SYSTEM EINES HOCHOFENS
SOUPAPE D'ÉTANCHÉITÉ POUR UN SYSTÈME PCI D'UN HAUT FOURNEAU

(30) Priority: 06.08.2019 LU 101340
(43) Date of publication of application: 15.06.2022
(73) Proprietor: Paul Wurth S.A., 1122 Luxembourg (LU)
(72) Inventor: HUTMACHER, Patrick, 3282 Bettembourg (LU); STEICHEN, Charles, 9080 Ettelbruck (LU)
(74) Representative: Office Freylinger
(86) International application number: PCT/EP2020/070882
(87) International publication number: WO 2021/023520

(56) References cited:
- WO-A1-2011/113761
- US-A- 3 198 583
- US-A- 5 799 928
- US-A1- 2009 087 284

## Description

### Technical Field

The invention relates to a seal valve for a PCI system of a blast furnace.

### Background Art

The injection of auxiliary fuels (natural gas, oil, coal or other carbonaceous materials) into the blast furnace has been driven by economic factors. Mid of last century, oil was, due to its low price, the preferred auxiliary fuel to reduce the consumption of expensive metallurgical coking coals and to avoid capital expenditures linked to the expansion of the coke-making plant.

A first major re-evaluation considering auxiliary fuel injection had to be done due to the oil crisis in the 1970s. Although pulverized coal injection (PCI) had been practiced in some blast furnaces since the early 1960s, it was only in the 1980s that the interest for PCI escalated due to the oil price shocks.

A second, more recent re-evaluation of auxiliary fuel injected into the blast furnace is caused by the drastically increasing energy prices, including the natural gas price and the decoupled price evolution for non-coking coals. Due to the higher availability, it is much probable that the non-coking coal prices will, also in future, remain lower than those for oil and natural gas.

It is well known that the injection of fuel, such as e.g. pulverized or granular coal, into the hot-air blast, which is blown through a plurality of tuyeres into a lower portion of the blast furnace, has many advantages. In particular, the injection of coal decreases the overall cost of produced hot metal, not only through the replacement of coke, but also through an increased productivity and the possibility of a prompt control of the blast furnace operation.

The injection of pulverized coal is performed conventionally by means of a fuel injection lance into the hot air blast at a certain distance upstream from the tuyere end opening into the furnace. In other words, the coal is injected through the hot-air passage in the tuyere. The coal fed through the fuel injection lance is in suspension in a carrier gas.

Before the pulverized coal is injected into the tuyere, it may undergo various stages of grinding, drying, sieving, intermediate storing and conveying. Most commonly, the pulverized coal is temporarily stored in conveying hoppers and/or distribution hoppers. In current PCI conveying lines, standard ball valves are normally used. In such valves, which can be removably fixed on the refractory wall such as described in patent document WO 2011/113761 A1, the ball-shaped valve member and the sealing elements are completely enclosed in the valve housing and are not accessible from the outside when the ball valve is installed. Thus, for any maintenance work on the valve, it must be completely removed from the conveying line and dismantled and/or repaired in an appropriate workshop. This requires temporary shutdown of the PCI system or at least of the respective conveying line. Precautionary inspection or maintenance is therefore not possible with this kind of valve.

Another issue is that there is only a small space between the ball and the housing. This, in turn can easily lead to blocking of the valve by pulverized coal jamming the space, possibly leading to a failure of the valve. It is generally impossible to detect any problems in the valve at an early stage and cleaning or repair of the valve is a complicated process that may lead to unwanted shutdown times.

### Technical Problem

It is thus an object of the present invention to facilitate maintenance of a seal valve for a PCI system. This object is solved by a seal valve according to claim 1.

### General Description of the Invention

The invention provides a seal valve for a PCI system of a blast furnace. The general working principle of a blast furnace is known in the art and therefore will not be explained herein. The PCI (pulverized coal injection) system comprises all components that are adapted for preparing, storing, conveying, guiding and injecting pulverized coal into the blast furnace. In general, most parts of the PCI system are pressurized during operation. It is understood that apart from pulverized coal as such, the PCI system contains a carrier gas, which can be used to carry the pulverized coal and is injected into the blast furnace along with the pulverized coal. Typically, a material gate is provided to open or close the flow of material through the PCI piping system. The present seal valve is arranged downstream of the material gate and is adapted to form, when shut, a gas tight seal. In other words, the present seal valve may be part of the pulverized coal injection system and located in the conveying hopper filling lines. The seal valve of the present invention is normally directly mounted (e.g. screwed) to the top of the conveying hopper and is used to separate a charging line from the conveying hopper.

The seal valve comprises a valve housing with an inlet opening, an outlet opening and a maintenance opening. The valve housing, which may also be referred to as a valve casing, provides an outer shell around an inner volume of the seal valve. During operation, pulverized coal can enter the inner volume through the inlet opening and/or exit the inner volume through the outlet opening. In some embodiments, the valve housing may be funnel-shaped towards the outlet opening. It is understood that the housing may comprise mounting structures around each of the inlet and outlet opening to facilitate a connection to other elements of the PCI system. For instance, a flange and/or a plurality of bores for receiving connecting bolts could be disposed around the respective opening. The inlet and outlet opening may be aligned along a central axis and may be symmetrical with respect to the central axis. This central axis may more or less correspond to the direction of material transport (or material flow) through the valve. The valve housing could be made of a single piece or of several pieces that are permanently or non-permanently connected with each other. For example, the housing could be made of cast steel or iron. Apart from the inlet opening and the outlet opening, which serve to transfer pulverized coal in and out of the valve housing, a maintenance opening is provided. As will be explained below, the function of the maintenance opening is not as an inlet or outlet for pulverized coal, but it is used during maintenance and/or repair of the seal valve.

Accordingly, the seal valve comprises a maintenance door that is adapted to close the maintenance opening in an operating position during operation of the seal valve and that is removable from the maintenance opening into a maintenance position. The maintenance door, which may also be referred to as a maintenance lid or maintenance cover, may at least partially be made of the same material as the valve housing. During operation of the seal valve, i.e. when pulverized coal may be received through the inlet opening and/or drained through the outlet opening, the maintenance door is in an operating position in which it closes the maintenance opening. In other words, in the operating position, the maintenance door is in contact with the maintenance opening, or rather with the valve housing around the maintenance opening, so that the maintenance opening is closed. Normally, the maintenance opening is sealingly closed by the maintenance door so that any leakage of pulverized coal and/or gases from the inside of the valve housing to the outside is prevented or at least reduced to a negligible amount. In order to improve the sealing effect, at least one of the maintenance door and the valve housing (around the maintenance opening) may have a sealing element capable of forming a gas tight seal, such as e.g. metallic spiral wound gaskets or O-ring seals made from silicon or nitrile rubber. When in the operating position, the maintenance door may be secured to the valve housing e.g. connected by a plurality of bolts. The maintenance door is movable into a maintenance position, in which it is removed from the maintenance opening. In other words, when the maintenance door is in the maintenance position, the inside of the valve housing is in communication with the outside through the maintenance opening.

The seal valve further comprises a valve member movably mounted to the maintenance door, wherein, when the maintenance door is in the operating position, the valve member is movable between a closed position for closing the seal valve and an open position, and, when the maintenance door is in the maintenance position, the valve member is accessible from outside the valve housing. The function of the valve member, which may be made of one or several pieces, is to provide the control function of the valve as such by at least alternatively closing the seal valve in a closed position or opening the valve in an open position. The valve member is not (directly) mounted to the valve housing, but to the maintenance door. Consequently, when the maintenance door is moved from the operating position to the maintenance position, the valve member is moved at the same time. The valve member can be moved between the open position and the closed position when the maintenance door is in the operating position. When the maintenance door is in the maintenance position, however, the valve member normally cannot be brought into a position in which it closes the seal valve. However, as explained above, the maintenance door is only positioned in the maintenance position when the seal valve is not operating, wherefore the closing function of the valve member is not needed in this case.

Advantageously, the maintenance door of the seal valve is pivotably mounted to the valve housing to be pivotable about a first pivot axis for movement between the operating position and the maintenance position. In other words, when the maintenance door is removed from the maintenance opening, it remains connected to the valve housing, normally by at least one bearing. The connection to the valve housing allows for movement between the operating position and the maintenance position. Normally, this is a guided movement, i.e. the maintenance door moves along a predetermined path. On the one hand, the fact that the maintenance door is movably mounted (or connected) to the valve housing facilitates handling of the maintenance door during e.g. an inspection operation. On the other hand, this also facilitates the process of moving the maintenance door back into the operating position, since proper alignment is normally guaranteed. Preferably, the movable connection reduces the degrees of freedom of the maintenance door to one. Therefore, it is easy for personnel to move the maintenance door back into the operating position.

The connection can normally be kept simple, while still achieving a high range of motion for the maintenance door by employing a pivot mount. Therefore, the maintenance door is pivotably mounted to the valve housing to be pivotable about a first pivot axis. In other words, the maintenance door is connected to the valve housing via at least one pivot bearing or hinge. For instance, the first pivot axis may be parallel to the above-mentioned central axis.

As the maintenance door is moved into the maintenance position, the valve member becomes accessible from the outside of the valve housing. Preferably, the valve member is at least partially disposed outside the valve housing when the maintenance door is in the maintenance position. However, even if it remains inside the valve housing, the valve member is moved closer to the maintenance opening by the movement of the maintenance door, wherefore it is easily accessible from the outside. Therefore, at least the valve member can be easily inspected, cleaned, repaired or replaced without the need for a complete dismantling of the seal valve. Rather, it is only necessary to remove the maintenance door from the maintenance opening, while the valve housing can remain connected to the rest of the PCI system. This is in particular a great advantage when inspection of the valve member and possibly other elements of the seal valve is considered as a precautionary measure. Other seal valves used in the art for PCI systems would require complete dismantling to allow for a precautionary inspection, wherefore such inspection is usually not performed. With the inventive seal valve, this can be done on a regular basis without the need of a shutdown of the PCI system and possibly the blast furnace itself.

In particular, the seal valve may be adapted for connection to a PCI conveying hopper. In many PCI systems, the pulverized coal is temporarily stored in one or several conveying hoppers, from where it may be transferred either directly to the injection lines or to a distribution hopper, which in turn is connected to the injection lines. As the pulverized coal is transferred from the distribution hopper to the injection lines or the conveying hopper, respectively, the inside of the distribution hopper is pressurised. For the most part, a plurality of conveying hoppers is used, which are operated in a staggered manner, so that pulverized coal can be provided from at least one conveying hopper while another conveying hopper is refilled. It is understood that, for connection to a PCI conveying hopper, the seal valve needs to be gas tight even under an elevated pressure.

In order to facilitate inspection, maintenance, cleaning, repair and/or replacement of the valve member, as well as in order to allow for better access to the inside of the valve housing, it is highly preferred that in the maintenance position, the valve member is disposed outside the valve housing. In other words, as the maintenance door is moved from the operating position to the maintenance position, the valve member is moved from the inside of the valve housing through the maintenance opening to the outside of the valve housing.

In order to facilitate a firm connection in the operating position, it is preferred that the valve housing comprises a planar flange surrounding the maintenance opening and the maintenance door rests against the flange in the operating position. The flange is planar, i.e. it is arranged along a plane and has a planar surface against which the maintenance door rests. This plane may in particular be parallel to the above-mentioned central axis. The flange may comprise a plurality of holes or bores arranged around the maintenance opening, which are adapted to receive bolts for connecting the maintenance door to the flange.

In general, the invention is not limited to a particular working mechanism of the valve member. It is preferred, though, that the valve member is pivotable, about a second pivot axis, between the closed position and the open position. That is, opening and closing of the valve member is achieved by a pivot movement about the second pivot axis. More specifically, the valve member is pivotably mounted to the maintenance door. When the maintenance door is in the operating position and is secured to the valve housing, this is also a pivot movement with respect to the valve housing. The second pivot axis is stationary with respect to the maintenance door and therefore its orientation with respect the valve door generally depends on the position of the maintenance door.

According to the present invention, but not exclusively, in combination with the above-mentioned embodiment in which the involvement is pivotable, it is preferred that the valve member is a disc-like valve flap. The valve flap is disk-like, which may in particular correspond to a circular shape. However, the shape could also be different, e.g. rectangular or polygonal. In general, the valve flap is more or less flat, i.e. it has one dimension (which can be referred to as its thickness) that is considerably smaller than its other two dimensions. Such a valve flap can in particular be used to close an inner opening in the valve member by a pivot motion, similar to a hinged door. The corresponding second pivot axis can be disposed near an edge of the valve flap.

According to one embodiment, the first pivot axis is perpendicular to the second pivot axis. For instance, if the first pivot axis is parallel to the central axis, the second pivot axis is also perpendicular to the central axis. As mentioned above, the central axis usually more or less corresponds to a direction of material flow through the seal valve. In this case, the described arrangement usually facilitates an opening and closing process of a valve flap as described above.

Preferably, the seal valve comprises a valve seat inside the valve housing, wherein in the closed position, the valve member sealingly engages the valve seat to close the seal valve, and in the open position, the valve member is removed from the valve seat. The valve seat is disposed inside the valve housing, which in general includes the possibility that it is a part of the valve housing and may be made as a single piece with other parts of the valve housing. The shape of the valve seat and the shape of the valve member are at least to some extent adapted to each other in order to allow for a sealing engagement. Taking the example of the present invention, if the valve member is a valve flap having a circular disc-like shape, the valve seat normally also has a circular, e.g. annular, geometry. In order to improve the sealing effect, at least one of the valve seat and the valve member may comprise an elastically deformable sealing element.

It is understood that optimum co-operation of the valve seat and the valve member is essential for the functionality of the seal valve as a whole. Therefore, it is beneficial if the valve seat can be inspected, cleaned, repaired and/or replaced as easily as possible. According to one embodiment, the valve seat is detachably connected to the valve housing. For instance, it can be bolted to the valve housing. When the bolts are removed, the valve seat can be detached from the valve housing. Normally, the bolts are accessible through the maintenance opening.

It is further preferred that the valve seat is removable through the maintenance opening. While it is conceivable that the valve seat could be moved out of the valve housing through the inlet opening or the outlet opening, this would necessitate detaching the seal valve from other components of the PCI system, which is generally undesirable. If the valve seat is removable through the maintenance opening, i.e. if it can be moved out of the valve housing through the maintenance opening, maintenance operations like repair or replacement of the valve seat can be carried out easily without the necessity of dismantling the seal valve as a whole.

Preferably, the seal valve comprises a sealing element with a double sealing system between the valve seat and the valve member. Such a double sealing system may comprise a metallic seal and a soft seal. During operation, a high pressure force is acting on the valve flap, which enables a so-called "positive sealing". The pressure difference between the area below and above the seal flap will push the valve flap with high force against the valve seat. The double sealing system, which is a redundant sealing system, will ensure 100% tightness, even after a certain period of time.

The seal valve may further comprise a valve seat with a heated seat surface in order to prevent any accretions on the seat surface. A vapour layer is generated, such that no bulk material, or pulverised coal, can bond to the heated surface. As no material build-up occurs on the valve seat, the latter maintains its capability to ensure proper closing of the seal valve.

A considerable problem in context with seal valves in a PCI system is clogging or jamming by pulverized coal. In other words, voids or spaces between moving parts could be blocked by coal particles which impairs the functionality of the seal valve or even renders the seal valve non-functional. This problem can be alleviated in various ways. According to one embodiment, the valve is designed so that the valve member is spaced-apart from an inner surface of the valve housing when being moved between the open position and the closed position. When the valve member is in the closed position, it needs to be in contact with the valve seat or some part of the valve housing. However, the geometry of the valve housing and the valve member as well as the mechanism of the valve member within the above housing are adapted so that the member is not in contact with the inner surface, but spaced apart from it. The spacing between the valve member and the inner surface could e.g. correspond to an expected maximum size of the coal particles. However, the spacing could be chosen to be larger to ensure undisturbed operation of the seal valve.

In particular when the valve member is pivotable about the second pivot axis, a rotational driving motion needs to be transferred to the valve member. For this case (and possibly other cases), it is preferred that a drive shaft for transmitting a drive force from a drive unit outside the valve housing to the valve member is guided through the maintenance door. The drive unit can also be referred to as a motor unit or motor. Normally, it is electrically powered, but could also be powered pneumatically, by a combustion process or other. It is beneficial to dispose the drive unit outside the seal valve to prevent any pollution or clogging by coal particles. Although there are other concepts for transferring the drive force to the valve member, it is preferred that the drive force is transferred through the maintenance door. In this embodiment, this is achieved by the drive shaft that is guided through the maintenance door. The maintenance door may comprise one or several bearings (roller bearings or other) to facilitate the rotation of the drive shaft. Normally, the drive shaft is made of a single piece, but it could also comprise several connected pieces.

It is preferred that during operation, the drive unit is mounted to the maintenance door and the connection between the maintenance door and the valve housing is designed so that the drive unit remains mounted to the maintenance door when the door is moved to the maintenance position. The drive unit, which may have a substantial weight, is mounted to the maintenance door, i.e. it is connected to the maintenance door so that its weight is supported. The connection between the drive unit and the maintenance door has to be designed accordingly. As long as the maintenance door is in operating position, it is normally secured to the valve housing e.g. by a plurality of bolts so that the force exerted by the weight and the reaction force of the drive unit are well distributed and transferred to the valve housing. According to this embodiment, though, and the connection between the maintenance door and the housing is designed so that the drive unit can remain connected to the maintenance door as the maintenance door is moved to the maintenance position. For example, if the maintenance door is pivotably connected to the valve housing, the at least one pivot bearing supports the combined weight of the maintenance door and the drive unit. This embodiment greatly facilitates precautionary inspection of the valve member and other components of the seal valve, since the drive unit does not have to be dismantled for such an inspection.

### Brief Description of the Drawings

Preferred embodiments of the invention will now be described, by way of example, with reference to the accompanying drawings, in which:
- Fig.1: is a first perspective view of an inventive seal valve with a maintenance door in an operating position;
- Fig.2: is a second perspective view of the seal valve from Fig.1;
- Fig.3: is a perspective view of the seal valve Fig.1 with the maintenance door in a maintenance position;
- Fig.4: is a top view of the seal valve from Fig.1;
- Fig.5: is a sectional view according to the line of V - V in Fig.4;
- Fig.6: is a sectional view according to the line VI - VI in Fig.4 with a valve member in a closed position;
- Fig.7: is a sectional view corresponding to Fig.6 with the valve member in an open position; and
- Fig.8: is an enlarged view of the sealing element of the seal valve of Fig.6.

### Description of Preferred Embodiments

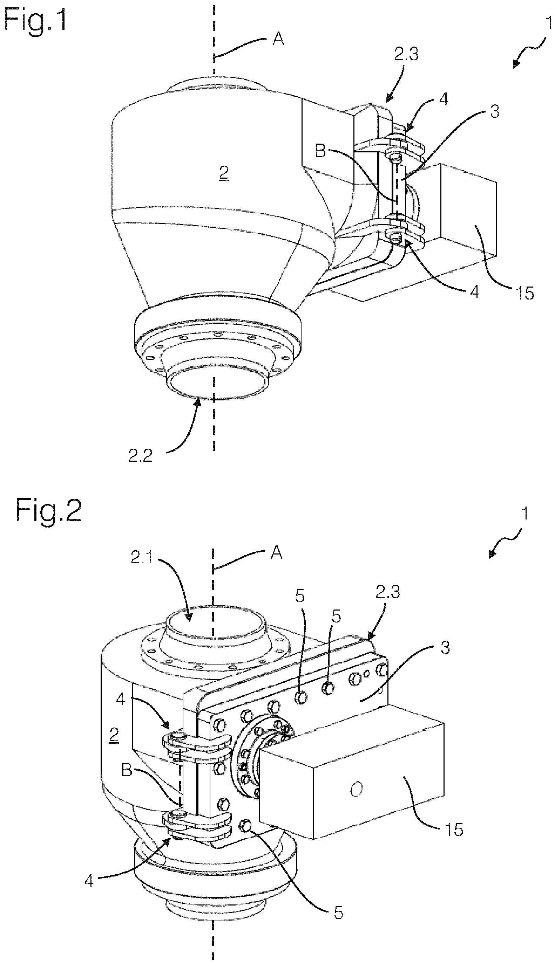

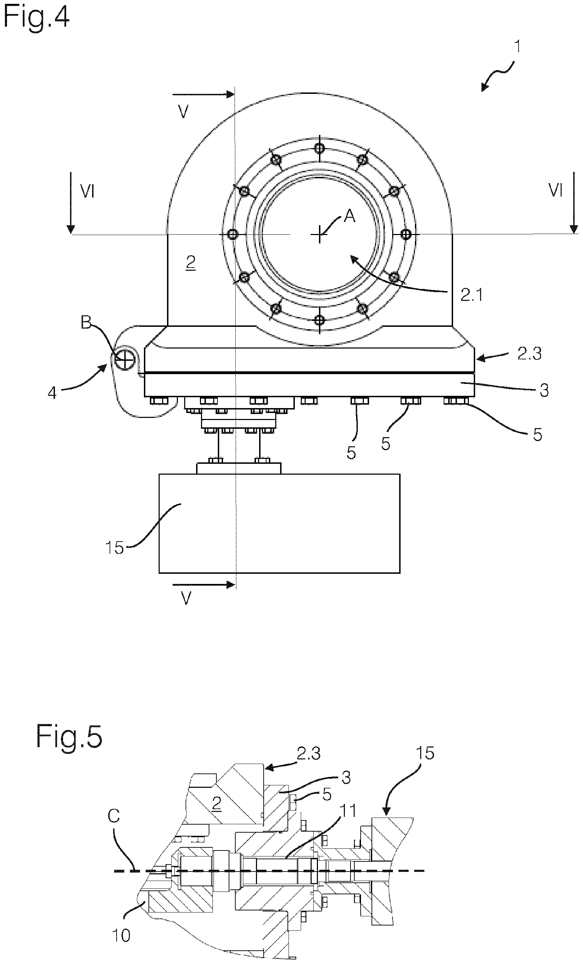

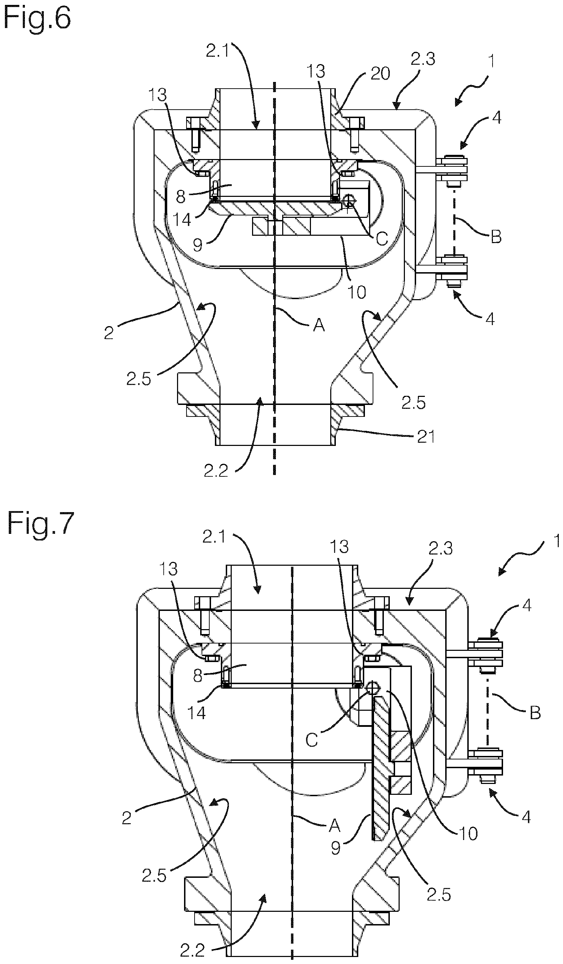

Figs. 1-7 show an inventive seal valve 1 that can be connected to the outlet of a conveying hopper that is part of a PCI (pulverized coal injection) system of a blast furnace. The seal valve 1 comprises a valve housing 2, which can be made of one or several pieces of steel. The valve housing has an inlet opening 2.1 and an outlet opening 2.2, which are aligned along a central axis A and are symmetric with respect to the central axis A. As indicated in Fig.6, the seal valve 1 can be connected to an inlet pipe 20 at the inlet opening 2.1 and to an outlet pipe 21 at the outlet opening 2.2. The inlet pipe 2.1 may be an outlet pipe of a PCI conveying hopper and the outlet pipe 21 may be a PCI charging line leading to the tuyeres.

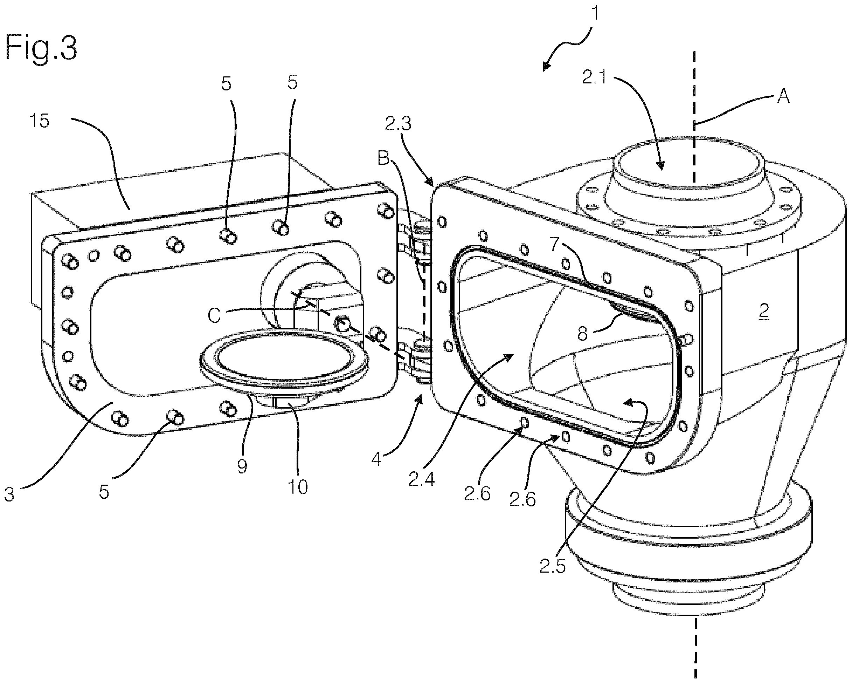

The housing 2 comprises a planar flange 2.3 that is parallel to the central axis A. A maintenance door 3 is connected to the flange 2.3 by two hinges 4, which define a first pivot axis B. Figs 1 and 2 show the seal valve 1 with the maintenance door 3 in an operating position, in which it is disposed in tight contact with the flange 2.3. In order to provide a tight and pressure resistant connection, a plurality of bolts 5 connect the maintenance door 3 with the flange 2.3 by engaging a corresponding plurality of threaded bores 2.6. As can be seen e.g. in Fig.3, a valve member or valve flap 9 is pivotably connected to the maintenance door 3 by an arm 10. Thus, the valve flap 9 can rotate about a second pivot axis C with respect to the maintenance door 3. The second pivot axis C is perpendicular to the first pivot axis B, which in turn is parallel to the central axis A. As can be seen in Figs 6 and 7, the extreme positions of the pivot movement are a closed position (shown in Fig.6) in which the valve flap 9 sealingly engages a valve seat 8 that is connected to the valve housing 2 by bolts 13, and an open position (shown in Fig.7). The valve flap 9 has a circular disc-like shape which corresponds to an annular cross-section of the valve seat 8. In order to improve the tightness of the connection between the valve flap 9 and the valve seat 8, and annular elastic sealing element 14 is integrated into the valve seat 8. Alternatively, the elastic sealing element may be integrated in the valve flap 9. It is understood that in the closed position of Fig.6, no pulverized coal can enter the valve housing 2 through the inlet opening 2.1.

This changes when the valve flap 9 is moved into the open position shown in Fig.7, in which the valve flap 9 is removed from the valve seat 8 by a rotation of approximately 90° about the second pivot axis C. The corresponding motion is indicated by the double arrow. It should be noted that during the movement and even when the valve flap 9 is in the open position, it is spaced-apart from an inner surface 2.5 of the valve housing 2. Therefore, it is extremely unlikely that the motion of the valve flap 9 could be blocked or hindered by coal particles inside the valve housing 2. While only the closed position and the (fully) open position are shown, it will be understood that one or several intermediate positions of the valve flap 9 are conceivable. The movement of the valve flap 9 is driven by a drive unit 15 that is arranged outside the valve housing 2 and is mounted to the maintenance door 3. The drive force is transferred from the drive unit 15 to the valve flap 9 by a drive shaft 11 that is guided through the maintenance door 3 and to which the arm 10 is connected.

Figs.1, 2 and 4-7 show the seal valve 1 with the maintenance door 3 in an operating position, i.e. the position of the maintenance door 3 during operation of the seal valve 1. Fig.3 however shows the maintenance door 3 in a maintenance position. In order to move the maintenance door 3 into this position, operation of the seal valve 1 has to be stopped temporarily and the bolts 5 have to be loosened. Afterwards, the maintenance door can be removed from a maintenance opening 2.4 that is surrounded by the flange 2.3. As can be seen in Fig.3, the maintenance opening 2.4 is also surrounded by another elastic sealing element 7, which improves the tightness of the connection between the maintenance door 3 and the valve housing 2. The maintenance opening 2.4 provides access to the inside of the valve housing 2. The maintenance door 3 is moved into the maintenance position by a pivot movement about the first pivot axis B. It should be noted that the drive unit 15 remains connected to the maintenance door 3, i.e. the combined weight of maintenance door 3 and the drive unit 15 is supported by the hinges 4. The fact that the drive unit 15 does not need to be dismantled greatly facilitates any maintenance operation, in particular a precautionary inspection.

Since the valve flap 9 is mounted to the maintenance door 3, it is moved outside of the valve housing 2 when the maintenance door 3 is pivoted into the maintenance position. Therefore, any inspection, maintenance, cleaning, repair or replacement of the valve flap 9 can easily be performed. Furthermore, the maintenance opening 2.4 provides easy access to the inside of the valve housing 2. Above all, the present seal valve allows for easily accessing an elastic sealing element 14 integrated into the valve seat 8, which is most likely to require replacement. Also, it is possible to access the bolts 13 that connect the valve seat 8 to the valve housing 2. By loosening these bolts 13, the valve seat 8 can be disconnected from the valve housing 2 and can afterwards be moved outside the valve housing 2 through the maintenance opening 2.4. This greatly facilitates repair or replacement of the valve seat 8 or the sealing element 14. Moreover, the inner surface 2.5 of the valve housing 2 can be inspected, cleaned or repaired by the access provided through the maintenance opening 2.4.

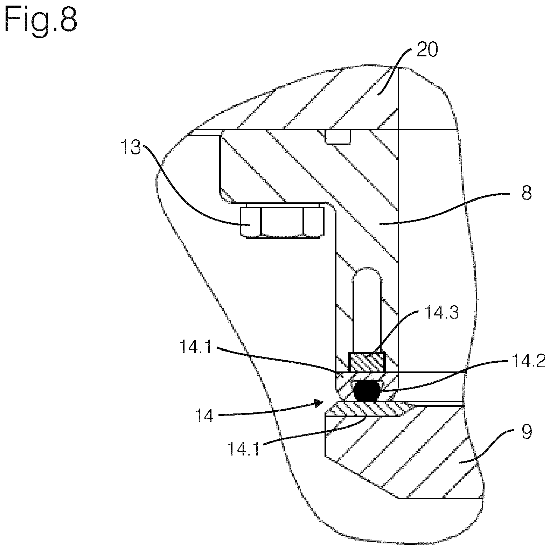

As can be seen more clearly from Fig.8, the sealing element 14 can be provided in the form of a double sealing system, comprising a metallic seal 14.1 and a soft seal 14.2. The metallic seal 14.1 is formed by two metallic elements, one on each of the valve seat 8 and the valve flap 9. The soft seal 14.2 can be lodged in one of the metallic elements and be in contact with the other metallic elements when the valve flap 9 is in its closed position. A heating element 14.3 may further be arranged in the valve seat 8 to provide the valve seat with a heated surface to prevent any accretions on the seat surface.

All these operations do not require dismantling the seal valve 1 from the PCI system. Therefore, any shutdown time of the PCI system - or at least part of it - can be minimised. In particular precautionary inspection of any part of the seal valve 1 can be performed easily, which enables to detect any possible problems at an early stage.

As can be noticed from the drawings, the valve housing is formed as a shell that provides an inner volume or chamber. Referring to the orientation of Fig.7, the housing 2 has a top portion, with the inlet opening 2.1 an door 3, and a funnel-shaped bottom portion. The top portion has a top wall with the inlet opening connecting with tubular later walls with the maintenance opening, the lateral walls converging in the lower portion to form the funnel shape. The valve seat 8 is removably mounted to the inner side of top wall. For ease of maintenance, seal valve is configured such that the lower seat 8 region, with sealing element 14, is at a level coinciding with the maintenance opening 2.4, and that the seat 8 can pass through the maintenance opening 2.4. Hence, when the maintenance door 3 is opened, the operator has a direct view on the seat 8 and can easily access it.

### List of Reference Numbers:

- 1: seal valve
- 2: valve housing
- 2.1: inlet opening
- 2.2: outlet opening
- 2.3: flange
- 2.4: maintenance opening
- 2.5: inner surface
- 2.6: bore
- 3: maintenance door
- 4: hinge
- 5, 13: bolt
- 7, 14: sealing element
- 8: valve seat
- 9: valve flap
- 10: arm
- 11: drive shaft
- 15: drive unit
- 14: sealing element
- 14.1: metallic seal
- 14.2: soft seal
- 14.3: heating element
- 20: inlet pipe
- 21: outlet pipe
- A: central axis
- B: first pivot axis
- C: second pivot axis

## Claims

1. A seal valve (1) of a pulverized coal injection system of a blast furnace, comprising:
- a valve housing (2) with an inlet opening (2.1), an outlet opening (2.2) and a maintenance opening (2.4),
- a maintenance door (3) that is adapted to close the maintenance opening (2.4) in an operating position during operation of the seal valve (1) and that is removable from the maintenance opening (2.4) into a maintenance position,
- a valve member (9) movably mounted to the maintenance door (3), wherein, when the maintenance door (3) is in the operating position, the valve member (9) is movable between a closed position for closing the seal valve (1) and an open position, and, when the maintenance door (3) is in the maintenance position, the valve member (9) is accessible from outside the valve housing (9),
**characterised in that** the maintenance door (3) is pivotably mounted to the valve housing (2) to be pivotable about a first pivot axis (8) for movement between the operating position and the maintenance position;
wherein the valve member (9) is a disc-like valve flap.

2. The seal valve according to claim 1, **characterised in that** it is adapted for connection to a pulverized coal injection conveying hopper.

3. The seal valve according to any of the preceding claims, **characterised in that** in the maintenance position, the valve member (9) is disposed outside the valve housing (2).

4. The seal valve according to any of the preceding claims, **characterised in that** the valve housing (2) comprises a planar flange (2.3) surrounding the maintenance opening (2.4) and the maintenance door (3) rests against the flange (2.3) in the operating position.

5. The seal valve according to any of the preceding claims, **characterised in that** the valve member (9) is pivotable, about a second pivot axis (C), between the closed position and the open position.

6. The seal valve according to any of the preceding claims, **characterised in that** the first pivot axis (8) is perpendicular to the second pivot axis (C).

7. The seal valve according to any of the preceding claims, **characterised in that** it comprises a valve seat (8) inside the valve housing (2), wherein in the closed position, the valve member (9) sealingly engages the valve seat (8) to close the seal valve (1), and in the open position, the valve member (9) is removed from the valve seat (8).

8. The seal valve according to claim 7,
**characterised in that** the valve seat (8) is detachably connected to the valve housing (2).

9. The seal valve according to claim 8,
**characterised in that** the valve seat (8) is removable through the maintenance opening (2.4).

10. The seal valve according to any claims 7 to 9,
**characterised in that** it comprises a sealing element (14) with double sealing system between said valve seat (8) and said valve member (9), said double sealing system comprising a metallic seal (14.1) and a soft seal (14.2).

11. The seal valve according to any of the preceding claims, **characterised in that** said valve seat (8) comprises a heating element (14.3).

12. The seal valve according to any of the preceding claims, **characterised in that** it is designed so that the valve member (9) is spaced-apart from an inner surface (2.5) of the valve housing (2) when being moved between the open position and the closed position.

13. The seal valve according to any of the preceding claims, **characterised in that** a drive shaft (11) for transmitting a drive force from a drive unit (15) outside the valve housing (2) to the valve member (9) is guided through the maintenance door (3) .

14. The seal valve according to claim 13,
**characterised in that** during operation, the drive unit (15) is mounted to the maintenance door (3) and the connection between the maintenance door (3) and the valve housing (2) is designed so that the drive unit (15) remains mounted to the maintenance door (3) when the door is moved to the maintenance position.

## Patentansprüche

1. Dichtungsventil (1) eines Kohlenstaub-Einblassystems eines Hochofens, aufweisend:
- ein Ventilgehäuse (2) mit einer Einlassöffnung (2.1), einer Auslassöffnung (2.2) und einer Wartungsöffnung (2.4),
- eine Wartungstür (3), die dazu geeignet ist, die Wartungsöffnung (2.4) in einer Betriebsposition während des Betriebs des Dichtungsventils (1) zu verschließen, und die von der Wartungsöffnung (2.4) aus in eine Wartungsposition gebracht werden kann,
- ein Ventilteil (9), das beweglich an der Wartungstür (3) angebracht ist, wobei, wenn sich die Wartungstür (3) in der Betriebsposition befindet, das Ventilteil (9) zwischen einer geschlossenen Position zum Schließen des Dichtungsventils (1) und einer offenen Position beweglich ist, und, wenn sich die Wartungstür (3) in der Wartungsposition befindet, das Ventilteil (9) von außerhalb des Ventilgehäuses (9) zugänglich ist,
**dadurch gekennzeichnet, dass** die Wartungstür (3) schwenkbar an dem Ventilgehäuse (2) angebracht ist, um um eine erste Schwenkachse (B) zur Bewegung zwischen der Betriebsposition und der Wartungsposition schwenkbar zu sein;
wobei das Ventilteil (9) eine scheibenförmige Ventilklappe ist.

2. Dichtungsventil nach Anspruch 1, **dadurch gekennzeichnet, dass** es zum Anschluss an einen Kohlenstaub-Einblasfördertrichter ausgebildet ist.

3. Dichtungsventil nach einem der vorhergehenden Ansprüche, **dadurch gekennzeichnet, dass** in der Wartungsposition das Ventilteil (9) außerhalb des Ventilgehäuses (2) angeordnet ist.

4. Dichtungsventil nach einem der vorhergehenden Ansprüche, **dadurch gekennzeichnet, dass** das Ventilgehäuse (2) einen ebenen Flansch (2.3) aufweist, der die Wartungsöffnung (2.4) umgibt und die Wartungstür (3) in der Betriebsposition an dem Flansch (2.3) anliegt.

5. Dichtungsventil nach einem der vorhergehenden Ansprüche, **dadurch gekennzeichnet, dass** das Ventilteil (9) um eine zweite Schwenkachse (C) zwischen der Schließstellung und der Offenstellung schwenkbar ist.

6. Dichtungsventil nach einem der vorhergehenden Ansprüche, **dadurch gekennzeichnet, dass** die erste Schwenkachse (B) senkrecht zur zweiten Schwenkachse (C) steht.

7. Dichtungsventil nach einem der vorhergehenden Ansprüche, **dadurch gekennzeichnet, dass** es einen Ventilsitz (8) im Inneren des Ventilgehäuses (2) aufweist, wobei das Ventilteil (9) in der Schließstellung abdichtend an dem Ventilsitz (8) anliegt, um das Dichtungsventil (1) zu schließen, und in der Offenstellung das Ventilteil (9) von dem Ventilsitz (8) entfernt ist.

8. Dichtungsventil nach Anspruch 7, **dadurch gekennzeichnet, dass** der Ventilsitz (8) lösbar mit dem Ventilgehäuse (2) verbunden ist.

9. Dichtungsventil nach Anspruch 8, **dadurch gekennzeichnet, dass** der Ventilsitz (8) durch die Wartungsöffnung (2.4) hindurch herausnehmbar ist.

10. Dichtungsventil nach einem der Ansprüche 7 bis 9, **dadurch gekennzeichnet, dass** es ein Dichtungselement (14) mit doppeltem Dichtungssystem zwischen dem Ventilsitz (8) und dem Ventilteil (9) aufweist, wobei das doppelte Dichtungssystem eine metallische Dichtung (14.1) und eine Weichdichtung (14.2) aufweist.

11. Dichtungsventil nach einem der vorhergehenden Ansprüche, **dadurch gekennzeichnet, dass** der Ventilsitz (8) ein Heizelement (14.3) aufweist.

12. Dichtungsventil nach einem der vorhergehenden Ansprüche, **dadurch gekennzeichnet, dass** es so ausgebildet ist, dass das Ventilteil (9) von einer Innenfläche (2.5) des Ventilgehäuses (2) beabstandet ist, wenn es zwischen der Offenstellung und der Schließstellung bewegt wird.

13. Dichtungsventil nach einem der vorhergehenden Ansprüche, **dadurch gekennzeichnet, dass** eine Antriebswelle (11) zur Übertragung einer Antriebskraft von einer Antriebseinheit (15) außerhalb des Ventilgehäuses (2) auf das Ventilteil (9) durch die Wartungstür (3) geführt ist.

14. Dichtungsventil nach Anspruch 13, **dadurch gekennzeichnet, dass** im Betrieb die Antriebseinheit (15) an der Wartungstür (3) montiert ist und die Verbindung zwischen der Wartungstür (3) und dem Ventilgehäuse (2) so ausgebildet ist, dass die Antriebseinheit (15) an der Wartungstür (3) montiert bleibt, wenn die Tür in die Wartungsposition bewegt wird.

## Revendications

1. Vanne d'étanchéité (1) d'un système d'injection de charbon pulvérisé d'un haut-fourneau, comprenant :
- un boîtier de vanne (2) avec une ouverture d'admission (2.1), une ouverture de sortie (2.2) et une ouverture de maintenance (2.4),
- une porte de maintenance (3) qui est adaptée pour fermer l'ouverture de maintenance (2.4) dans une position de fonctionnement pendant le fonctionnement de la vanne d'étanchéité (1) et qui peut être retirée de l'ouverture de maintenance (2.4) dans une position de maintenance,
- un élément de vanne (9) monté d'une manière mobile sur la porte de maintenance (3), dans lequel, lorsque la porte de maintenance (3) est dans la position de fonctionnement, l'élément de vanne (9) est mobile entre une position fermée pour fermer la vanne d'étanchéité (1) et une position ouverte, et, lorsque la porte de maintenance (3) est dans la position de maintenance, l'élément de vanne (9) est accessible depuis l'extérieur du boîtier de vanne (2),
**caractérisée en ce que** la porte de maintenance (3) est montée d'une manière pivotante sur le boîtier de vanne (2) pour pouvoir pivoter autour d'un premier axe de pivotement (B) pour un mouvement entre la position de fonctionnement et la position de maintenance ;
dans laquelle l'élément de vanne (9) est un clapet de vanne en forme de disque.

2. Vanne d'étanchéité selon la revendication 1, **caractérisée en ce qu'**elle est adaptée pour être raccordée à une trémie de transfert d'injection de charbon pulvérisé.

3. Vanne d'étanchéité selon l'une quelconque des revendications précédentes, **caractérisée en ce que** dans la position de maintenance, l'élément de vanne (9) est disposé à l'extérieur du boîtier de vanne (2).

4. Vanne d'étanchéité selon l'une quelconque des revendications précédentes, **caractérisée en ce que** le boîtier de vanne (2) comprend une bride plane (2.3) entourant l'ouverture de maintenance (2.4) et la porte de maintenance (3) repose contre la bride (2.3) dans la position de fonctionnement.

5. Vanne d'étanchéité selon l'une quelconque des revendications précédentes, **caractérisée en ce que** l'élément de vanne (9) peut pivoter, autour d'un deuxième axe de pivotement (C), entre la position fermée et la position ouverte.

6. Vanne d'étanchéité selon l'une quelconque des revendications précédentes, **caractérisée en ce que** le premier axe de pivotement (B) est perpendiculaire au deuxième axe de pivotement (C).

7. Vanne d'étanchéité selon l'une quelconque des revendications précédentes, **caractérisée en ce qu'**elle comprend un siège de vanne (8) à l'intérieur du boîtier de vanne (2), dans lequel dans la position fermée, l'élément de vanne (9) engage hermétiquement le siège de vanne (8) pour fermer la vanne d'étanchéité (1), et dans la position ouverte, l'élément de vanne (9) est retiré du siège de vanne (8).

8. Vanne d'étanchéité selon la revendication 7, **caractérisée en ce que** le siège de vanne (8) est raccordé d'une manière détachable au boîtier de vanne (2).

9. Vanne d'étanchéité selon la revendication 8, **caractérisée en ce que** le siège de vanne (8) peut être retiré à travers l'ouverture de maintenance (2.4).

10. Vanne d'étanchéité selon l'une quelconque des revendications 7 à 9, **caractérisée en ce qu'**elle comprend un élément d'étanchéité (14) avec un double système d'étanchéité entre ledit siège de vanne (8) et ledit élément de vanne (9), ledit double système d'étanchéité comprenant un joint métallique (14.1) et un joint souple (14.2).

11. Vanne d'étanchéité selon l'une quelconque des revendications précédentes, **caractérisée en ce que** ledit siège de vanne (8) comprend un élément de chauffage (14.3).

12. Vanne d'étanchéité selon l'une quelconque des revendications précédentes, **caractérisée en ce qu'**elle est conçue de sorte que l'élément de vanne (9) est espacé d'une surface interne (2.5) du boîtier de vanne (2) lorsqu'il est déplacé entre la position ouverte et la position fermée.

13. Vanne d'étanchéité selon l'une quelconque des revendications précédentes, **caractérisée en ce qu'**un arbre d'entraînement (11) destiné à transmettre une force motrice depuis une unité d'entraînement (15), située à l'extérieur du boîter de vanne (2), à l'élément de vanne (9) est guidé à travers la porte de maintenance (3).

14. Vanne d'étanchéité selon la revendication 13, **caractérisée en ce que** pendant le fonctionnement, l'unité d'entraînement (15) est montée sur la porte de maintenance (3) et le raccordement entre la porte de maintenance (3) et le boîtier de vanne (2) est conçu de sorte que l'unité d'entraînement (15) reste montée sur la porte de maintenance (3) lorsque la porte est déplacée vers la position de maintenance.
